# FASCICULE DE BREVET EUROPEEN

(11) **EP 1 741 337 B1**
(45) Date de publication et mention de la délivrance du brevet: **13.11.2013**
(21) Numéro de dépôt: 06380188.0
(22) Date de dépôt: 03.07.2006
(51) Int. Cl.: A01N 25/04, A01N 25/34, A01N 25/18, A01N 53/00

(54) **Méthode de fabrication d'un produit solide antimites pour les vêtements et son conteneur**
Verfahren zur Herstellung eines festen Antimottenmittels für Kleidung und entsprechende Behälter
Process for preparing a solid antimite product for clothing and corresponding containers

(30) Priorité: 07.07.2005 ES 200501661
(43) Date de publication de la demande: 10.01.2007
(73) Titulaire: Europea del Hogar y La Limpieza Eurolar, S.L., 17745 Llado (Girona) (ES)
(72) Inventeur: Bellonch, Camps Josep, 17745 Llado (Girona) (ES)
(74) Mandataire: Espiell Volart, Eduardo Maria

(56) Documents cités:
- EP-A1- 0 537 998
- EP-A2- 0 215 225
- US-A- 5 707 639

## Description

### Objet de l'invention

Cette invention concerne une nouvelle méthode de fabrication pour obtenir des insecticides solides antimites pour les vêtements, basés sur l'Empenthrin ou le Permetrin, au lieu de la présentation traditionnelle de ces produits sous forme liquide et/ou imprégnant des bandes de cellulose.

Le mélange insecticide, une fois obtenu, est placé chaud directement dans des moules ou bien il est conditionné dans des récipients ayant diverses formes telles que: de boules, cubes, cylindres, pyramides ou tout autre forme polyédrique ou sphéroïdale, ce mélange dès qu'il sera refroidi deviendra solide, en épousant la forme de son conteneur.

### Antécédents

Dans le document US 5707639 est décrite une composition régulatrice de la croissance d'insectes, utilisable dans l'eau, qui comprend : a) un ingrédient actif de régulation de la croissance d'insectes ; b) une substance organique qui a une solubilité non supérieure à 2 % dans l'eau à 20° C et un point de fusion de 35 à 100° C ; et c) un glycol sélectionné dans le groupe qui possède un point de fusion de 35 à 100° C, où sont fondus le constituant (b) et le constituant (c), lesquels sont ensuite refroidis en vue de leur solidification au cours de la procédure de fabrication de la composition régulatrice de la croissance d'insectes.

On sait que les insecticides antimites ont été traditionnellement fabriqués sur la base de p-dichlorobenzène, se présentant sous forme de pastilles, boules ou blocs obtenus par moulage sous pression du produit en poudre ou en granulés.

Il existe également diverses alternatives d'antimites sur la base de Permetrin et d'Empenthrin présentés sous forme liquide dans des récipients appropriés ou bien imprégnant des bandes de cellulose de diverses tailles.

Dans les deux cas le produit actif s'évapore en créant à l'endroit où il a été placé (placards, tiroirs, valises, etc.) une ambiance hostile à tous insectes ce qui entraîne leur élimination.

Permetrin est la dénomination chimique ordinaire de: 3-phénoxybenzyle 1(RS) cis, trans 3-(2,2-dichlorovinyle)-2,2-diméthylcyclopropanecarboxylate).

Empenthrin es la dénomination chimique ordinaire de: (RS) -1-ethynyl-2-méthylpent-2-enyl (1R)-cis, trans-chrysantemate.

**COMPOSANTS POUR LA MÉTHODE DE FABRICATION:** La méthode de l'invention a besoin de trois composants basiques: Solvant, Gélifiant et Insecticide.

Les solvants seront le véhicule nécessaire pour contrôler la volatilité du produit, en assurant ainsi une durée de jours ou de mois précis.

Ces solvants peuvent être du genre: Glycolique (Propylenglycole, Dipropylenglycole) Glycoéthers (Propylenglycole méthyléther; Dipropylenglycole méthyléther, Dipropylenglycole n-butyléther, Tripropylenglycole méthyléther) ou simplement de l'eau déminéralisée.

On choisit ces solvants non seulement parce qu'ils ont tendance à s'évaporer selon la vitesse dont ces produits ont besoin mais de plus parce que ce sont des solvants qui respectent l'environnement, en ne créant aucun danger ni pour les objets avec lesquels ils seront en contact (vêtements, bois, plastique, etc.) ni notamment pour les personnes, les animaux domestiques et l'environnement.

Les pourcentages varieront entre les 60% et les 80% selon la volatilité et la durée du produit choisi.

L'**insecticide** basé sur le Permetrin ou l'Empenthrin sous leur forme traditionnelle liquide, est reconnu comme principe actif face aux mites.

Les pourcentages varieront entre les 0,05% et les 5% selon le niveau d'efficacité souhaité.

Le **Gélifiant** sera le responsable du passage de l'état liquide au solide aussi bien des solvants que de l'insecticide.

Ces gélifiants peuvent être du genre: Caragénates, Stéarates, Alcool cétyl-stéarique ou alcool stéarique.

Les pourcentages varieront entre les 5% et les 15% selon le niveau de dureté du produit final souhaitée.
**MÉTHODE DE FABRICATION:** C'est le motif principal de cette invention et elle consiste en convertir un antimite liquide à base d'Empenthrin et ou de Permetrin en un autre sous forme solide qui épousera ultérieurement les diverses formes du récipient qui le contiendra.

Pour ce faire:
a) Mélange de solvants liquides ou pâteux sélectionnés dans le groupe : Glycolique, tels que Propylenglycole, ou Dipropylenglycole ; Glycoéthers, tels que Propylenglycole méthyléther, Dipropylenglycole méthyléther, Dipropylenglycole n-butyléther, Tripropylenglycole méthyléther ; ou simplement eau déminéralisée, pendant 5 à 15 minutes, en chauffant au-dessus de 50° C, et lesdits solvants constituant un pourcentage compris entre 60 % et 80 % de la totalité du produit ;
b) Ajout des gélifiants solides à la même température jusqu'à la fonte de ces derniers pendant 15 à 45 minutes ; lesdits gélifiants étant sélectionnés dans le groupe : Caragénates, Stéarates, Alcool cétyl-stéarique ou Alcool stéarique, lesdits gélifiants constituant un pourcentage compris entre 5 % et 15 % de la totalité du produit ;
c) Incorporation de l'insecticide liquide constitué de Permethrin ou d'Empenthrin, en continuant leur mélange durant 5 à 15 minutes et en maintenant le mélange au-dessus de 50° C ; ledit insecticide liquide constituant un pourcentage compris entre 0,05 % et 5 % de la totalité du produit ;
d) Verser tout le mélange obtenu dans le récipient conteneur où, en se refroidissant, il deviendra solide et épousera la forme du conteneur.
e) Même si, comme on a déjà indiqué, les récipients pourraient avoir diverses structures, on choisit ceux qui sont transparents pour permettre d'observer la lente dégradation du produit de la forme solide originale jusqu'à ce qu'il disparaisse par sublimation.

Les matériaux transparents seront de préférence du genre PVC (chlorure de polyvinyle), PET (téréphtalate de polyéthylène), PP (polypropylène) et PE (polyéthylène).

Ces matériaux par le système de thermoformage, injection ou soufflage épouseront les formes indiquées, dans des dimensions qui seront de 1 cm³ à 50 cm³ de contenance totale.

### Description des dessins

Pour pouvoir effectuer une description détaillée de la fabrication du produit et des récipients qui vont le contenir, une feuille de dessins est annexée dans lesquels, à titre d'exemple non limitatif, une mise en oeuvre schématisé de cette méthode de fabrication a été illustrée.

Dans ces dessins:
La Figure 1 est une vue schématique de la méthode de fabrication du produit dans les diverses étapes principales nécessaires à cet effet;
La Figure 2 montre un conteneur ayant la forme préférée qui va contenir le produit; et

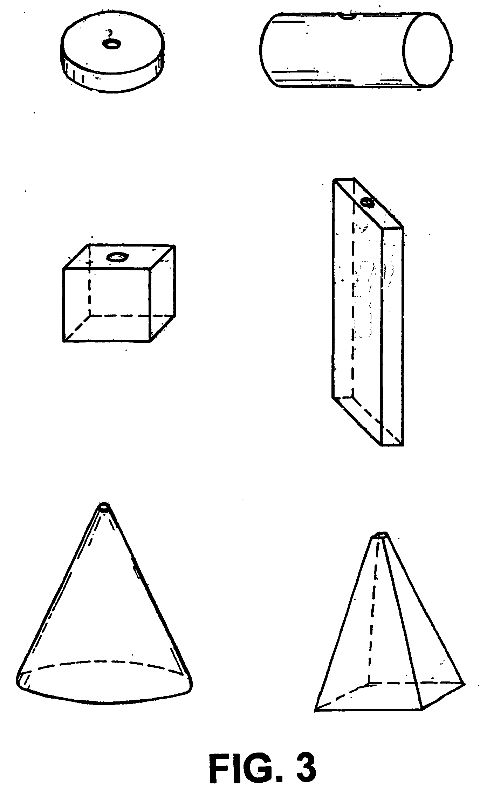

Finalement, la Figure 3 représente également à titre d'exemple, certaines des formes basiques pouvant contenir le produit final en question.

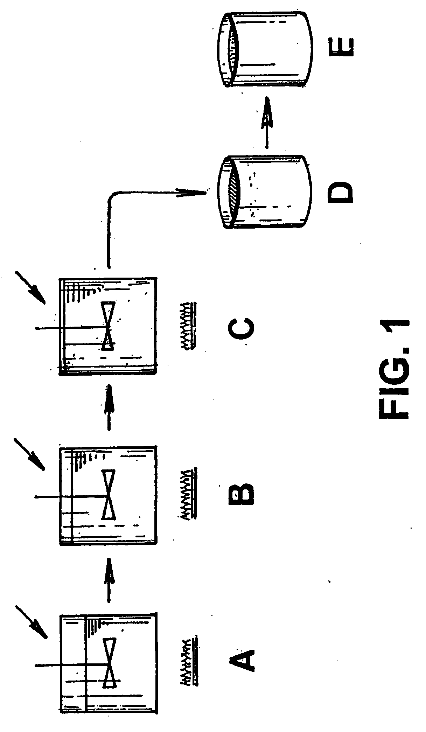

Dans cette Figure 1 on peut noter en premier lieu et signalé par la lettre "A", la première étape du mélange de solvants ou d'eau déminéralisée, dans un récipient approprié, lequel, à son tour, est en train d'être chauffé à une température supérieure à 50°C. Dans la représentation suivante et signalée avec la lettre "B" on est en train d'ajouter le gélifiants au mélange obtenu en "A" en conservant la température indiquée ci-dessus. Ensuite, et signalé para la lettre « C » on montre le même récipient auquel on est en train d'ajouter et en le mélangeant également, l'insecticide liquide tout en conservant la température indiquée.

Le contenu du récipient "C" est ensuite versé dans un récipient signalé comme "D" qui pour simplifier a été dessiné comme un petit réservoir cylindrique. Ce liquide versé est laissé refroidir et comme montre la représentation "E" il devient un corps solide.

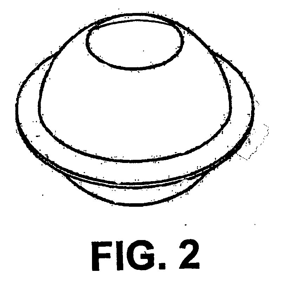

La Figure 2 représente un récipient préféré pour la vente du produit au public pour son originalité et qui, évidement correspond au dessin des lettres "D" et "E" de la figure précédente.

La Figure 3 signale simplement des variantes de récipients qui pourraient être utilisés sans modifier en aucun cas l'esprit de l'invention.

## Revendications

1. Méthode de fabrication d'un produit solide antimites pour les vêtements, que requiert pour sa préparation des solvants, gélifiants et insecticides, lesquels, une fois mélangés à chaud, sont laissés refroidir en obtenant la conversion en un produit solide **caracterisée en ce que** les étapes de fabrications du produit sont:
a) Mélanger solvants liquides ou pâteux sélectionnés dans le groupe : Glycolique, tels que Propylenglycole, ou Dipropylenglycole ; Glycoéthers, tels que Propylenglycole méthyléther, Dipropylenglycole méthyléther, Dipropylenglycole n-butyléther, Tripropylenglycole méthyléther ; ou simplement eau déminéralisée, pendant 5 à 15 minutes, en chauffant au-dessus de 50° C, et lesdits solvants constituant un pourcentage compris entre 60 % et 80 % de la totalité du produit ;
b) ajouter des gélifiants solides à la même température jusqu'à ce qu'ils soient fondus, durant 15-45 minutes; lesdits gélifiants étant sélectionnées dans le groupe :
Caragénates, Stéarates, Alcool cétyl-stéarique ou Alcool stéarique, lesdits gélifiants constituant un pourcentage compris entre 5% et 15% de la totalité du produit;
c) Incorporer l'insecticide liquide constitué de Permethrin ou d'Empenthrin, en continuant leur mélange durant 5 à 15 minutes et en maintenant le mélange au-dessus de 50° C ; ledit insecticide liquide constituant un pourcentage compris entre 0,05 % et 5 % de la totalité du produit ;
d) Verser tout le mélange obtenu dans le récipient conteneur où, en se refroidissant, il deviendra solide et épousera la forme du conteneur;

2. Méthode pour la fabrication d'un produit solide antimites pour les vêtements, conformément la revendication 1, **caracterisée en ce que** le récipient recevant le produit liquide qui va se refroidir jusqu'à ce qu'il devienne solide présente une structure préférée de corps de révolution ayant des rebords sous forme de lèvres dans la zone centrale et un trou à la partie supérieure d'entrée du produit et **en ce que** ce récipient est de préférence en matériau transparent, sélectionné parmi des plastiques du genre PVC (vinyle de polychlorure), PET (téréphtalate de polyéthylène) et PE (polyéthilène) en ledit conteneur ayant une capacité totale comprise entre 1 cm³ et 50 cm³.

3. Méthode pour la fabrication d'un produit solide antimités pour les vêtements, conformément à la revendication 1, **caracterisée en ce que** le récipient est de forme polyédrique présentant toujours un trou pour l'entrée du produit.

## Patentansprüche

1. Verfahren zur Produktion eines festen Mottenschutzprodukts für Kleidungsstücke, das für seine Herstellung Lösungsmittel, Geliermittel und Insektizide erfordert, die, nachdem sie unter Anwendung von Wärme gemischt wurden, abkühlen gelassen werden, wobei die Umwandlung in ein festes Produkt erzielt wird, **dadurch gekennzeichnet, dass** die Schritte zur Produktion des Produkts die folgenden sind:
a) Mischen von flüssigen oder pastenförmigen Lösungsmitteln, die aus der folgenden Gruppe ausgewählt sind: Glykole, wie Propylenglykol oder Dipropylenglykol; Glykolether, wie Propylenglykolmethylether, Dipropylenglykolmethylether, Dipropylenglykol-n-butylether, Tripropylenglykolmethylether; oder einfach vollentsalztes Wasser, 5 bis 15 Minuten lang, wobei auf mehr als 50 °C erhitzt wird und die Lösungsmittel einen Prozentsatz bilden, der zwischen 60 % und 80 % des gesamten Produkts liegt;
b) Zugeben von festen Geliermitteln bei derselben Temperatur, bis sie geschmolzen sind, für 15 - 45 Minuten; wobei die Geliermittel aus der folgenden Gruppe ausgewählt sind: Carrageenate, Stearate, Cetylstearylalkohol oder Stearylalkohol, wobei die Geliermittel einen Prozentsatz bilden, der zwischen 5 und 15 % des gesamten Produkts liegt;
c) Einarbeiten des flüssigen Insektizids, das von Permethrin oder Empenthrin gebildet wird, wobei ihr Mischen für 5 bis 15 Minuten fortgesetzt wird und das Gemisch auf mehr als 50 °C gehalten wird; wobei das flüssige Insektizid einen Prozentsatz bildet, der zwischen 0,05 % und 5 % des gesamten Produkts liegt;
d) Gießen des gesamten erhaltenen Gemischs in den Aufnahmebehälter, in dem das Gemisch, indem es sich abkühlt, fest wird und sich der Form des Behälters anpasst.

2. Verfahren zur Produktion eines festen Mottenschutzprodukts für Kleidungsstücke nach Anspruch 1, **dadurch gekennzeichnet, dass** der Behälter, der das flüssige Produkt aufnimmt, das sich abkühlen wird, bis es fest wird, einen bevorzugten Aufbau eines Rotationskörpers mit Rändern in der Form von Lippen im mittleren Bereich und einer Öffnung im oberen Teil zum Einbringen des Produkts aufweist und dass dieser Behälter vorzugsweise aus einem transparenten Material ist, das aus Kunststoffen des Typs PVC (Polyvinylchlorid), PET (Polyethylenterephthalat) und PE (Polyethylen) ausgewählt ist, wobei der Behälter ein Gesamtfassungsvermögen hat, das zwischen 1 cm³ und 50 cm³ liegt.

3. Verfahren zur Produktion eines festen Mottenschutzprodukts für Kleidungsstücke nach Anspruch 1, **dadurch gekennzeichnet, dass** der Behälter eine polyedrische Form hat, die nach wie vor eine Öffnung für das Einbringen des Produkts aufweist.

## Claims

1. Method for manufacturing a solid moth repellent product for clothing, the preparation of which requires solvents, gelling agents and insecticides which, once heated, mixed and left to cool are transformed into a solid product **characterised in that** the following production stages are:
a) Mixing liquid or paste solvents selected from the group: Glycols, such as Propylene glycol or Dipropylene glycol; Glycol ethers, such as Propylene glycol methyl ether, Dipropylene glycol methyl ether, Dipropylene glycol n-butyl ether, Tripropylene glycol methyl ether; or simply demineralised water, for 5 to 15 minutes while heating to above 50°C, said solvents constituting between 60% and 80% of the whole product;
b) adding solid gelling agents at the same temperature until melted, taking 15-45 minutes; said gelling agents being selected from the group: Carageenans, Stearates, Cetostearyl alcohol or Stearyl alcohol, said gelling agents constituting between 5% and 15% of the whole product;
c) Incorporating liquid insecticide made with Permethrin or Empenthrin and further mixing for 5 to 15 minutes, maintaining the mixture above 50°C; said liquid insecticide constituting between 0.05% and 5% of the whole product;
d) pouring the full mixture obtained into the container where upon cooling it will solidify and take on the shape of the container

2. Method for manufacturing a solid moth repellent product for clothing, according to claim 1, **characterised in that** the container receives the liquid product for cooling until it solidifies having a preferred structure; comprising a revolving body with lip-shaped ledges in the central area and a hole in the upper part for product entry, and by this container being preferably of transparent material, selected from among PVC (polyvinyl chloride), PET (polyethylene terephthalate) and PE (polyethylene) type plastics and having a total capacity of between 1 cm³ and 50 cm³.

3. Method for manufacturing a solid moth repellent product for clothing, according to claim 1, **characterised in that** the recipient has a polyhedric shape and always incorporates a hole for product entry.
